# EUROPEAN PATENT APPLICATION

(11) **EP 2 354 289 A1**
(43) Date of publication of application: **10.08.2011**
(21) Application number: 11151144.0
(22) Date of filing: 17.01.2011
(51) Int. Cl.: D06C 25/00, D06M 23/18, D06H 5/00, A41H 43/04, B29C 65/50, A41D 27/24, B29L 9/00, B29L 7/00

(54) **Method for impermeably joining laminated three or two layer fabrics, or fabrics with a raised pile on either one or two faces thereof**

(30) Priority: 04.02.2010 IT MI20100169
(71) Applicant: MACPI S.p.A. PRESSING DIVISION, 25036 Palazzolo Sull'Oglio (Brescia) (IT)
(72) Inventor: Cartabbia, Giovanni, 25036 Palazzolo sull'Oglio (BS) (IT)
(74) Representative: Cicogna, Franco

(57) **Abstract**

A method for impermeably joining laminated three or two layer fabrics either with or without a complex structure on the joining face or fabrics with a raised pile on either one or two faces thereof comprises a preparing step for preparing a fabric material and a welding and sealing step, the fabric preparing step including three operating steps, a cauterizing step, a cutting step and an adhesive applying step.

## Description

### BACKGROUND OF THE INVENTION

The present invention relates to a method for impermeably joining laminated fabrics having an inner membrane and a complex structure on the joining side, or the so-called fleece-pile side thereof, or raised pile fabrics, the so-called single/double side fleece fabrics.

Composite textile products, made by coating or laminating textile materials with a membrane-barrier ply or layer to provide liquid impermeable fabrics are well known and broadly used.

Said textile products are called "laminated" fabrics and are conventionally used for making protective garments or other liquid impermeable textile articles.

The laminated fabrics comprise two or more layers at least one of which consists of a membrane-barrier layer.

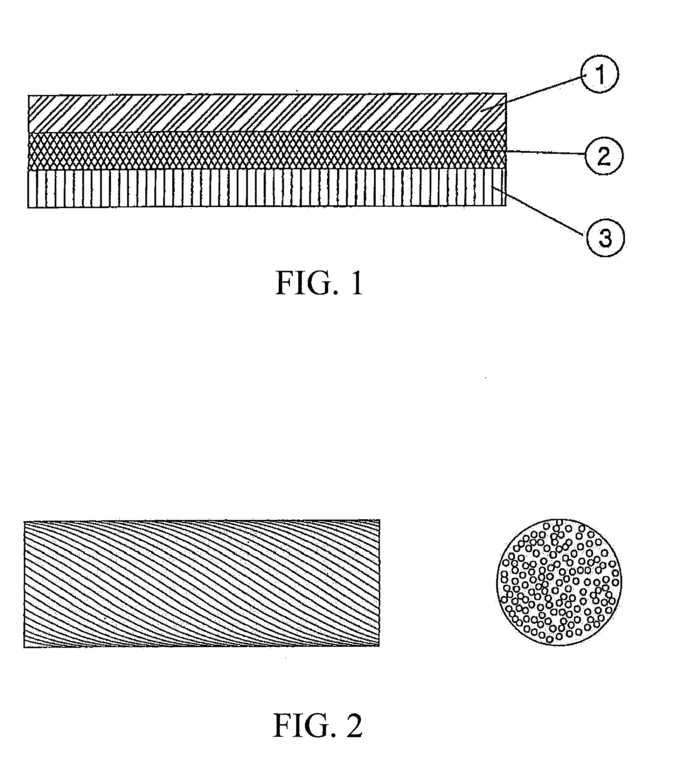

Figure 1 shows a three-layer laminated fabric, the so-called soft shell fabric, which is the most commonly used one and which comprises an outer fabric 1, a membrane-barrier layer 2 and a complex textile structure 3, the so-called fleece-pile structure, constituting the inner layer.

The fabric 1 is a textile sheet of different types which may either comprise or not a complex textile material.

The membrane-barrier 2 is a synthetic material film which is liquid transpirable in a direction (from the inner to the outer side thereof) and liquid impermeable in the opposite direction.

By the term "textile structure", that is the inner layer 3, or fleece-pile layer, it is intended a variously processed textile product (which is processed by a contouring, notching, ridging or raising and so on operations, or a fibrous filamentary structure which may include woven or non woven materials, knitted, brushed, raised, carded and so on materials.

Laminated fabrics are at present used for making garments, coating or lining products and other liquid impermeable articles, which have transpirable properties.

The above products are called "soft shell" products, since they include flexible and soft junctions, complex textile materials having a high duration on the outer side thereof and a good softness on the inside thereof, to provide desired touch, wearableness and comfort properties.

The above products were conventionally made by very complex treatment operations and methods, involving a removal of materials and an application of sealing tapes.

Laminated textile products impermeable to liquids on the outer side thereof, but transpirable from the inner to the outer part thereof, are also well known on the market.

It is moreover known that in the textile product industry, and in particular in the garment one, is necessary to use a reliable, efficient and inexpensive method for joining two or more "panels" or pieces of the above laminated textile materials to provide a complex construction forming a joined, bound or seamed coupling and having good impermeability, flexibility and softness properties.

On the other hand, very difficulties have been encountered in making an impermeable joining on laminated fabrics including two, three or more fabric layers having a complex textile structure on the inner layer thereof.

The above mentioned difficulties are due to different factors.

At first, liquids enters the above textile materials because of a wicking or capillarity effect.

Moreover, it is not possible to prevent liquids from penetrating the fabric material by applying on the outer sides of said fabric material adhesive sealing substances, of a fluid or not fluid type, since it would be necessary to provide a full impregnating exclusively at the sealing region thereof.

Such an operation is a very difficult one and would cause an unacceptable stiffness of the textile product.

In fact, the individual threads used for the textile layers usually comprise a plurality of filaments, as is schematically shown in figure 2, providing gaps therebetween which cannot be sealed by conventional sealing methods including the steps of absorbing, by a wick, capillarity or leaking effect, the liquids.

Actually prior sealing methods comprise three different processing steps, consisting of preparing the fabric materials, joining them and sealing the formed joints.

In the fabric preparing step, in view of the above disclosure related to the passage of liquids through the textile fibers, it is necessary to remove the inner layer of the complex textile material at the sealing region thereof, up to the protective barrier layer surface, which consists of the impermeable part.

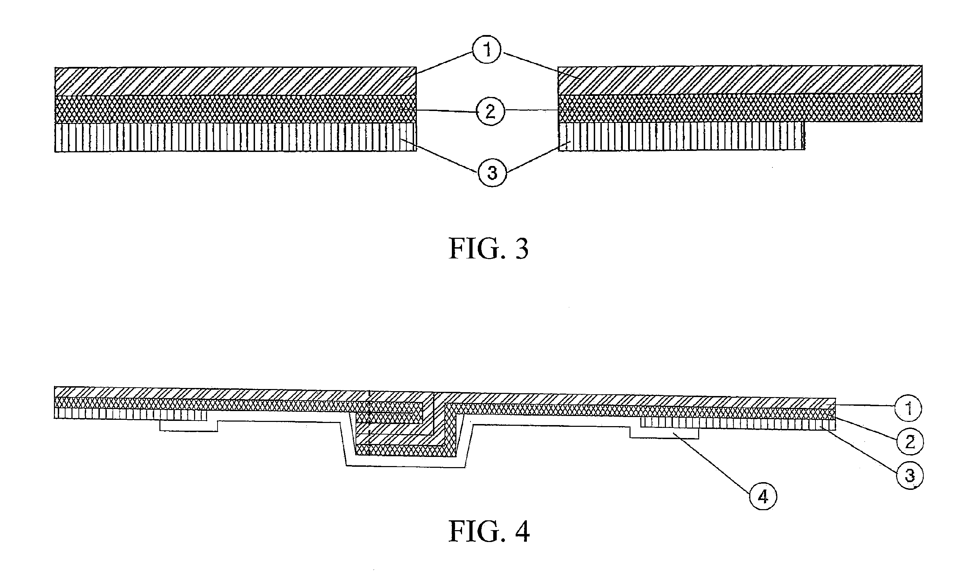

Figures 3 shows a shaving or shearing operation which may be performed by different shaving or shearing and sanding machines and methods.

For joining the fabric pieces, upon having prepared the fabric panels as hereinabove stated, said fabric panels are joined by seaming, ultrasound, high frequency and so on joining methods, while leaving exposed to the view, on the sides of the joints, an impermeable protective barrier portion.

Upon having joined the fabric panels, it is then necessary to seal them by taping machines which hot apply an impermeable adhesive tape or strip on the protective barrier portion left free on the sides of the joining region, thereby providing a sealed joint with good impermeable properties.
Figure 4 shows a joint made by a folded seam.
Figure 5 shows said joint made by a simple seam.
Figure 6 shows a joint made by ultrasound or high frequency cutting operations.

In said figures 4 to 6, the reference number 1 shows the outer fabric, 2 the protective barrier, 3 the complex inner fabric and 4 the impermeable adhesive tape or strip.

As is herein clearly shown, the sealing is achieved by causing the adhesive tape to properly adhere to the "uncovered" impermeable protective barrier.

The above joining and sealing method which is the most broadly used one for providing impermeable joints on laminated two or three-layer fabrics, necessarily requires three method steps, that is a preparing, a joining and a sealing steps each of which must be performed either by a single operation or multiple operations.

In particular the shaving operation is a very delicate one since, during this processing step, the barrier membrane may be easily damaged or textile fiber parts may be left exposed to the view, the end joint having in this case a large thickness negatively affecting the fabric flexibility and softness.

In addition, the above joining methods further comprises an additional step of making holes through the fabrics, at the seamed joints, by using threads or yarns which must be further sealed.

Moreover, it is necessary to use different machines and additional materials, such as yarns, impermeable adhesive tapes, which cause the fabric thickness, stiffness and joint cost to undesirable increase.

### SUMMARY OF THE INVENTION

Accordingly, the aim of the present invention is to provide a method for efficiently and inexpensively making an impermeable joint on laminated two- or three-layer fabrics, having a complex textile structure on the inner joining side thereof.

Within the scope of the above mentioned aim, a main object of the invention is to provide such a joining structure which may be made by sealing or welding operations only, without using shaving, material removal, taping operations and ultrasound or high frequency seaming operations.

Another object of the present invention is to provide protective or not protective garments and articles, such as shoes, technical and furnishing equipments, in an inexpensive and safe manner, that is to provide aesthetically pleasant articles having good impermeability, touch and wearableness properties and a very small thickness.

Yet another object of the present invention is to provide such a fabric construction which, owing to its specifically designed constructional features, is very reliable and safe in operation.

According to one aspect of the present invention, the above mentioned aim and objects, as well as yet other objects, which will become more apparent hereinafter, are achieved by the inventive impermeable joint making method, particularly for laminated three-layer fabrics having a complex structure on the joining side thereof, the so-called soft-shell fabric, or laminated two-layer fabrics, the so-called hard shell fabric materials, or including a raised pile on a single side or both sides thereof, that is the so-called single/double side fleece fabric materials.

### BRIEF DESCRIPTION OF THE DRAWINGS

Further characteristics and advantages of the present invention will become more apparent hereinafter from the following detailed disclosure of a preferred, though not exclusive, embodiment of the invention, which is illustrated, by way of an indicative, but not limitative, example in the accompanying drawings, where:
Figure 1 is a cross-sectional view of a laminated three-layer fabric;
Figure 2 shows a single thread including a plurality of filaments;
Figure 3 shows a shaving or material removing operation;
Figure 4 shows a joint made by a folded seam and taping joining operation;

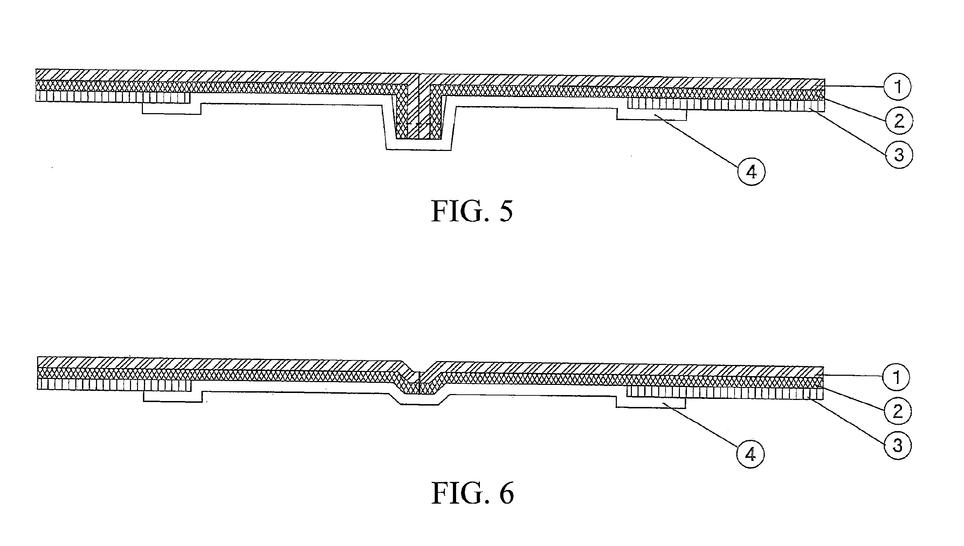

Figure 5 shows a joint made by a simple seam and taping operation;
Figure 6 shows a joint made by a ultrasound or high frequency cutting and taping operation;

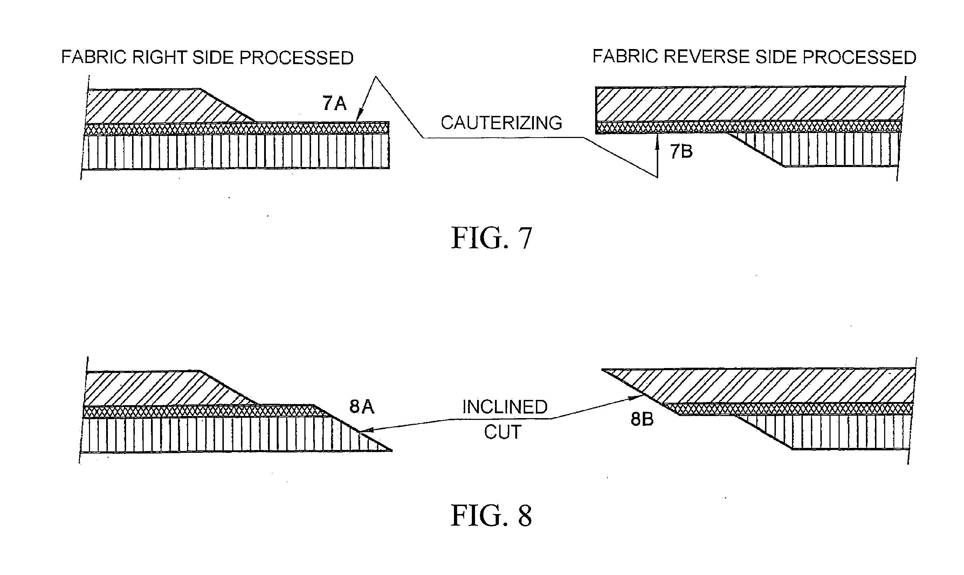

Figure 7 shows a cauterizing step according to the present invention (Figure 7a on the right side and Figure 7b on the reverse side of the fabric);
Figure 8 shows an inclined cutting operating step according to the present invention (Figure 8a on the fabric right side and Figure 8b on the fabric reverse or back side);

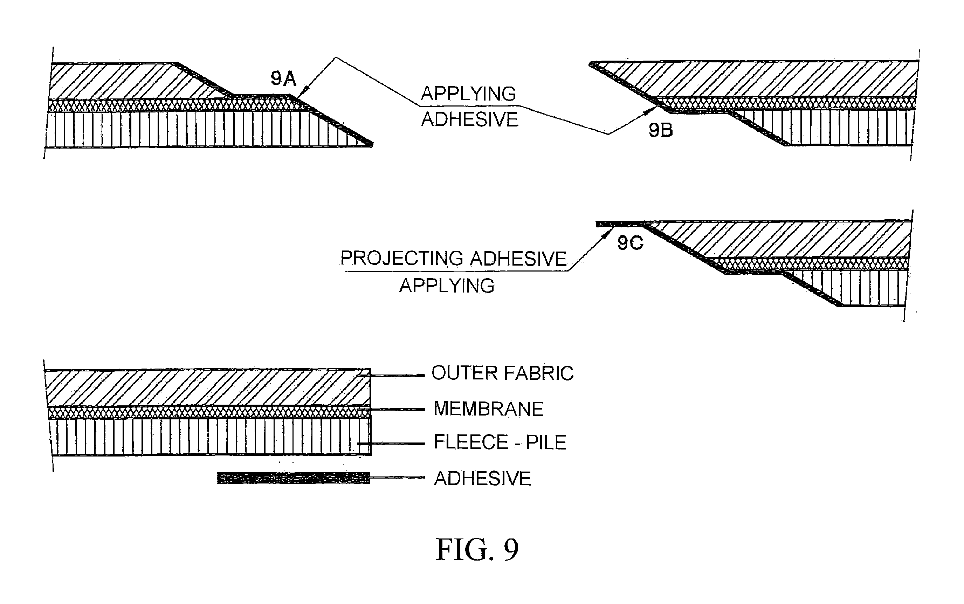

Figure 9 shows a further operating step for applying an adhesive material according to the present invention (Figure 9a on the fabric right side, Figure 9b on the fabric reverse side, Figure 9c on the fabric reverse side with a projecting adhesive material);

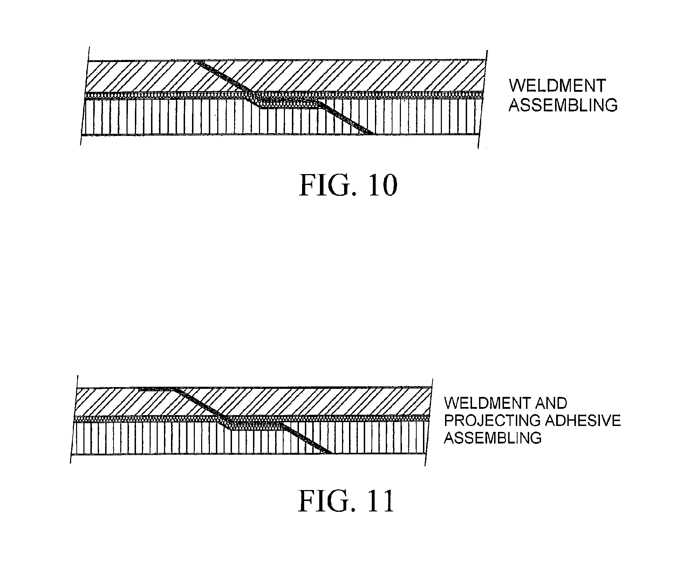

Figure 10 shows a sealing or welding assembling operating step according to the present invention; and
Figure 11 shows an assembling operating step performed by weldment and further shows a projecting adhesive material according to the present invention.

### DESCRIPTION OF THE PREFERRED EMBODIMENTS

With reference to the number references of the above mentioned figures, the joining or sealing method according to the present invention comprises, for making the joining, only two operating steps, that is a preparing step for preparing the fabric material and a sealing joining step, without applying additional materials in the form of yarns or sealing adhesive tapes to be applied in a visible manner on the outside of the fabric.

The inventive method allows to efficiently make impermeable protective garments and a very broad range of other textile products having technical characteristics which cannot be achieved by prior making methods.

The fabric preparing step comprises three operating or processing sub-steps that is a cauterizing step, a cutting step and an adhesive applying step.

The above mentioned three steps may be carried out by a specifically designed machine which is adapted to perform all said three steps in a single pass and in a sequential manner.

Said machine may be assimilated, with respect to its layout and working pattern, to a stitching or taping machine sequentially performing, in a very small space, the three mentioned operating steps.

The cauterizing step, shown in figure 7, is the first processing step and is designed to modify the textile structure surface, by a localized treatment performed by one or more air jets overheated to a temperature variable from 200°C to 350°C, and at a pressure from 1.5 to 2.5 bars.

This hot processing step may be carried out on complex laminated bi or three-layer fabrics, either on a single or both sides thereof, or on a fabric layer having a surface including both smooth and raised pile regions, or projecting patterns.

In the first case, said cauterizing step, shown in figure 7, fully modifies the surface fiber structure, by bringing said fibers to a plastic status, and flattening and partially removing tem by suction.

In the second case (fabric), the pile or fleece is so applied to the fabric surface to provide a smooth and compact fabric material.

In this operating step, the overheated air jets are caused to impinge only on the involved region by using temperatures, flow rates and pressures as necessary to cauterize the fabric surface being treated.

Said cauterizing step modifies and makes compact the textile layer, to prepare it for the welding/sealing operation, the thus processed fabric surface preventing liquids from passing therethrough, and thereby adhesive will be applied non to low mechanical strength filaments, but to a strong surface having a good mechanical tearing strength.

Said cauterizing step reduces moreover the fabric thickness, which is very useful in raised pile or fleece fabric, since greatly improves the fabric touch and wearableness properties.

The cutting step, shown in figure 8, is carried out immediately after the cauterizing one, and is designed to form on the fabric an inclined cut, which can be extended either from the inner to the outer of the fabric or vice versa, and may be performed either on a raw fabric or on an already cauterized fabric.

In particular, the cutting operation may be performed on any desired fabric materials, such as a laminated, leather, artificial leather, sky material.

This cutting step, by properly adjusting the cutting machine, may be fitted to different fabric thickness, while modifying the cutting angle from 20 to 45 degrees and accordingly even the cut length thereof.

From the above it should be apparent that, by forming an inclined cut, the surface of the individual layer or layers will be exposed to the outside, depending on the fabric thickness and cutting angle, in a manner improved with respect to a orthogonal cut.

Another effect of the inclined cut is that of eliminating complex steps for forming an orthogonal cut joint, thereby providing a fabric joint having improved wearabeleness and touch properties.

In the adhesive material applying step, the machine applies to the fabric an adhesive film supported on a paper or plastic support.

Such an application must be a positionally accurate one, and is hot performed at a temperature from 120°C to 160°C, so as to transfer the adhesive film to the fabric, without molting said adhesive film.

In particular, the adhesive film will has a thickness from 80 to 200 µm and a width from 8 to 20 mm, and may be applied either to the right side or the reverse side of the fabric, depending on the cut being performed, at any desired positions and size, both on raw fabrics and on already cauterized ones.

As is clearly shown in figures 9a and 9b, the adhesive material is either arranged only on the cut or it may project for a distance from 0 to 5mm, both on the inner part and outer part of the cut itself (see figure 9c).

In this connection it should be pointed out that several adhesive films with different characteristics, compositions and thicknesses to fit the desired fabrics and requirements, such as colored, refracting and customized films are known and could be used.

As disclosed, the steps for preparing the fabric are three: a cauterizing (step A), a cutting (step B), an adhesive applying step (step C).

If desired, it could be possible to omit at will either one or two processing steps, thereby providing the following operating step combinations: A - B - C - AB - AC - BC - ABC.

Furthermore, it is possible to fit the operating steps to different fabric types and thicknesses by changing the cutting angle and it is moreover possible to apply the desired film with the intended size and at the desired positions, but also performed to cause said film to project from the fabric.

All the above mentioned operating steps may be performed by a fabric processing machine carrying out, in sequence and in a single operating pass, the above mentioned three operating steps with a processing speed from 1 to 3 meters/minute.

Moreover, before disclosing in a more detailed manner the joints which may be made by the inventive method, the fabric physical-mechanical-aesthetic features, and the cauterizing, inclined cutting and adhesive applying operations will be hereinbelow briefly disclosed.

The above steps may be applied, either fully or partially, for all fabric materials and, if desired, also other materials but, in particular, they have been specifically designed to solve the problem of making an impermeable or not impermeable joint on fabric materials having both one or two outer surfaces including a raised pile pattern, in particular pile-fleece, carded, velvet, non woven, high bulk fabric materials and so on.

The above mentioned fabrics may be laminated 2/3 layer fabrics, either with a barrier membrane or film for garments impermeable to liquids, or without an impermeable barrier film.

If an adhesive joining would be made in both the above cases, then a poor mechanical sealing would be obtained, since the adhesive material would affect the fabric surface layer, that is the raised pile one, and accordingly the joint mechanical strength would only depend on the low surface fiber strength and not on the adhesive bound region.

Moreover, in an impermeable joining operation, as stated, the raised pile layer will transport liquids by a wicking and capillarity effect.

As stated, the invention includes an advantageous cauterizing step performed by a hot treatment to bring to a plastic status and cauterize the textile fibers forming the raised pile fabric outer layer and which, by suitable controlling the air flow rate, speed and temperature, will detach and remove the cauterization residues.

By this treatment, the textile fibers fully change their structure and are removed while reducing the fabric thickness, and providing a strong surface adapted for an adhesive joining operation for preventing liquids to pass and providing a high tearing strength.

The inclined cut according to the present invention, which is adjustably inclined to the fabric and the fabric forming threads, allows moreover to properly connect and seal the adhesive joints, while providing very improved touch and wearableness properties.

Thus, the inventive impermeable joints provide a butt sealing of the textile cauterized fibers, as shown in figures 10 and 11, which illustrate a beveled joints with butt sealed jointed portions.

As disclosed, in preparing the fabric, an adhesive film is hot applied to said fabric to transfer the adhesive film from its support to the fabric, without molting the adhesive film, the adhesive joining method being carried out either by a continuous adhesive applying machine, or taping and carousel machines, per se known on the market, and designed for subjecting the joints to a temperature from 120°C to 180°C, a pressure from 0.2 to 0.5 kg/cm², and for an application time from 5 to 15 seconds.

As disclosed, by the inventive method, it is possible to join both conventional fabrics having a raised pile on a single side or two sides thereof (the single/double side fleece fabrics) and technical multilayer fabrics with a protective membrane (soft shell - hard shell) fabric materials.

In the first case minimum thickness and very soft joints are obtained whereas, in the second case, the joints will have, in addition to the above characteristics, also a liquid impermeability property, without using sealing yarns and adhesive tapes.

It has been found that the invention fully achieves the intended aim and objects.

In fact, the invention has provided a novel, improved and simplified method for impermeably, reliably sealing joints between two or more laminated fabric panels having a complex textile structure (the soft/hard shell fabrics).

The inventive method allows moreover to also join conventional raised pile fabrics (camel pile, raised, velvet, single/double side fleece fabrics), to provide small thickness seamless joints.

The present invention, in particular, achieves the object of practically and economically making an impermeable joint on laminated bi or three-layer fabrics having a complex textile structure on their joining sides which joint is made by a very simple and quick sealing or welding operation without using material removing, shaving, taping, sewing and ultrasound or high frequency sealing operations.

The present invention, as disclosed, allows to make either protective or non protective garments, such as shoes, technical and furnishing equipments, in a very inexpensive and safe manner, thereby providing aesthetically pleasant articles, having very good touch and wearableness properties, impermeability characteristics and a minimum thickness.

In practicing the invention, the used materials, as well as the contingent size and shapes, can be any, according to requirements.

## Claims

1. A method for impermeably joining laminated three or two layer fabrics, either with or without a complex structure on their joining face, or fabrics with a raised pile on either one or two faces thereof, **characterized in that** said method comprises a step of preparing a fabric material and a step for joining said prepared fabric material by welding and sealing, said fabric preparing step comprising three operating steps, a fabric cauterizing step, a fabric cutting step and an adhesive applying step.

2. A method according to claim 1, **characterized in that** said cauterizing step modifies the textile structure of a fabric surface, by a localized treatment carried out by an overheated air jet, said cauterizing step being performed on complex laminated bi or three layer fabrics either with or without pile, or on a fabric layer having a raised pile on a side or both sides thereof, for a raised pile fabric, said cauterizing step fully modifying a surface fiber structure, by bringing the fabric fibers to a plastic flattened and partially removed condition, the surface pile being removed thereby providing a smooth and compact fabric material, in said cauterizing step one or more overheated air jets being caused to impinge only on a fabric region at cauterizing temperatures and pressures, the cauterization step not affecting fabric inner layers.

3. A method according to claim 1, **characterized in that** said cutting step is carried out immediately after said cauterizing step and comprises performing a fabric adjustably inclined cut extending either from a fabric inner to a fabric outer side or vice versa, said cut being made either on a raw fabric or on an already cauterized fabric, said fabric comprising a laminated, leather, artificial leather, sky fabric material.

4. A method according to claim 1, **characterized in that** said adhesive applying step comprises applying to said fabric an adhesive film supported on a paper or plastic support, said adhesive film being so heated so as to cause said adhesive film to be transferred to the fabric without melting, said adhesive film being arranged either on a right or on a reverse side of said fabric, said fabric being either a raw or an already cauterized fabric, said adhesive film being either arranged only on said inclined cut or projecting both at an inner and an outer part of said inclined cut.

5. A method according to claim 1, **characterized in that** said three steps are sequentially performed in a single operating pass.

6. A method according to claim 4, **characterized in that** said adhesive film is a single sealing adhesive film.

7. A method according to claim 1, **characterized in that** said method comprises a thermosealing step.

8. A method according to claim 1, **characterized in that** said method provides an impermeable joint on a laminated bi or three layer, hard/soft shell fabric material without requiring fabric material removal, shaving, sewing and ultrasound and taping operations.

9. A method according to claim 1, **characterized in that** said method provides a single/double side fleece fabric having a raised pile on one or both faces thereof, and without using sewing operations.

10. A method according to claim 1, **characterized in that** said method provides textile products having at least a beveled minimum thickness joint.
